# EUROPÄISCHE PATENTSCHRIFT

(11) **EP 3 027 930 B1**
(45) Veröffentlichungstag und Bekanntmachung des Hinweises auf die Patenterteilung: **05.05.2021**
(21) Anmeldenummer: 14741527.7
(22) Anmeldetag: 17.07.2014
(51) Int. Cl.: F16D 66/02, B60T 17/22

(54) **VERFAHREN ZUM ÜBERWACHEN EINER BREMSE SOWIE BREMSE, DIE MIT DEM VERFAHREN ÜBERWACHT WIRD**
METHOD FOR MONITORING A BRAKE AND BRAKE WHICH IS MONITORED BY THE METHOD
PROCÉDÉ PERMETTANT DE SURVEILLER UN FREIN ET FREIN SURVEILLÉ PAR LEDIT PROCÉDÉ

(30) Priorität: 02.08.2013 DE 102013012991; 30.06.2014 DE 102014009681
(43) Veröffentlichungstag der Anmeldung: 08.06.2016
(73) Patentinhaber: WABCO Europe BVBA, 1160 Brussels (BE)
(72) Erfinder: ANTONY, Paul, 67550 Worms (DE)
(74) Vertreter: Rabe, Dirk-Heinrich
(86) Internationale Anmeldenummer: PCT/EP2014/001948
(87) Internationale Veröffentlichungsnummer: WO 2015/014450

(56) Entgegenhaltungen:
- EP-A1- 2 479 450
- EP-A1- 2 497 969
- EP-A1- 2 520 817

## Beschreibung

Die Erfindung betrifft ein Verfahren zum Überwachen einer Bremse, bei dem das Lüftspiel der Bremse gemessen wird und auf einen Fehler geschlossen wird, wenn das Lüftspiel der Bremse einen unteren Grenzwert unterschreitet oder einen oberen Grenzwert überschreitet.

Ein solches Verfahren ist bekannt, beispielsweise aus der EP 2 520 817 A1. Danach wird sowohl bei Überschreiten als auch bei Unterschreiten eines Soll-Lüftspiels eine Warnanzeige aktiviert. Einem bei der bekannten Bremse vorgesehenen Steuergerät werden ein Bremssignal und ein Bremsdrucksignal zur Erfassung des Betriebszustands der Bremsanlage zugeführt. Sie werden nur zur Erfassung des Betriebszustandes, also ob die Bremse sich im Bremszustand oder im Lösezustand befindet, berücksichtigt.

Die DE 42 12 407 A1 offenbart einen Lüftspieldetektor für eine druckluftbetätigte Scheibenbremse, bei der ein Drehwinkelsensor zum Messen des Lüftspiels Verwendung findet. Nach der WO 2010/005379 A1 wird das Lüftspiel aus dem Hebelweg und dem Druckverlauf bei einer Bremse bestimmt.

Die DE 10 2011 016 126 A1 offenbart ein Verfahren zum Bestimmen des Verschleißzustandes eines Bremsbelags aus einem Betätigungsweg und einer Betätigungskraft, wobei der Verschleißzustand aus der Steifigkeit der Radbremse durch Quotientenbildung bestimmt wird. Dabei wird die Temperaturabhängigkeit der Steifigkeit mittels eines Temperaturmodells kompensiert.

Eine Temperaturkompensation ist auch in der EP 1 384 638 A2 erwähnt, die eine Vorrichtung und ein Verfahren zur Überwachung des Funktions- und/oder Verschleißzustandes von Bremsbelägen und/oder Bremsscheiben einer Fahrzeugbremse beschreibt. Der Verschleiß selbst wird dabei durch Integration ermittelt.

Die EP 0 566 005 A1 beschreibt einen Überhitzungsdetektor für eine Scheibenbremse, bei dem die auf die Bremse einwirkende Wärmemenge aufintegriert wird und dadurch (indirekt) die momentane Temperatur der Bremse bestimmt wird.

Nach der EP 0 417 431 A1 werden ein auf die Bremse wirkender Druck und eine daraus resultierende Verformung eines einschlägigen Bremsenteils gemessen und mit einer Verformungskennlinie verglichen. Bei einem vorbestimmten Maß der Abweichung wird auf Überhitzung geschlossen und es wird ein Warnsignal abgegeben.

Die DE 102 59 529 A1 beschreibt ein Verfahren zur Ermittlung eines Bremsenzustands, bei dem die Differenz zwischen zwei im zeitlichen Abstand voneinander ermittelten Temperaturen ermittelt und daraus auf den Bremsenzustand geschlossen wird.

Schließlich offenbart die EP 1 000 270 B1 ein Verfahren und eine Einrichtung zur Erkennung einer falsch eingestellten Spielnachstellung für Bremsen, wobei die Temperaturen zweier Bremsen an einer Achse ermittelt werden und ein Warnsignal erzeugt wird, wenn die beiden Temperaturen über ein vorbestimmtes Maß hinaus voneinander abweicher

Aus der EP 2 479 450 A ist ein Verfahren zum Rejustieren beidseitigen Lüftspiels bei Schiebesattelbremsen von Fahrzeugen bekannt.

Das eingangs erwähnte und aus der EP 2 520 817 A1 bekannte Überwachungsverfahren für eine Bremse liefert nicht immer verläßliche Ergebnisse. Wenn sich beispielsweise das Lüftspiel verringert, weil infolge einer längeren Bremsung die Temperatur der Bremse gestiegen ist, so kann der untere Grenzwert für das Lüftspiel unterschritten sein, ohne dass ein Fehler vorliegt. Andersherum führen eine Kompression und eine Relaxation der Bremsbeläge nach längerer Beaufschlagung einer zum Parken betätigten Feststellbremse zu einer kurzfristigen Vergrößerung des Lüftspiels, wodurch der obere Grenzwert überschritten sein kann, und zwar wiederum ohne dass ein Fehler vorliegt.

Der Erfindung liegt daher die Aufgabe zugrunde, das Überwachungsverfahren und die Bremse nach der EP 2 520 817 A1 derart weiterzubilden, dass ungerechtfertigte Fehlermeldungen vermieden werden.

Erfindungsgemäß wird die gestellte Aufgabe dadurch gelöst, dass der untere und/oder der obere Grenzwert variabel ist /sind, und zwar abhängig von mindestens einer momentanen oder vergangenen das Lüftspiel beeinflussenden Betriebszustandsgröße.

Mit anderen Worten sind der obere bzw. der untere Grenzwert nicht starr vorgegeben. Vielmehr wird mindestens eine Betriebszustandsgröße herangezogen, um den betreffenden Grenzwert sachgemäß festzulegen. Anders ausgedrückt wird ein weiterer unterer und/oder ein weiterer oberer Grenzwert festgelegt, der die mindestens eine Betriebszustandsgröße berücksichtigt, und für die Frage, ob auf einen Fehler geschlossen wird, wird der genannte weitere untere bzw. obere Grenzwert herangezogen.

Erfindungsgemäß kann jede einzelne das Lüftspiel beeinflussende Betriebszustandsgröße allein oder zusammen mit anderen Betriebszustandsgrößen herangezogen werden. Erfindungsgemäß bevorzugt ist sie jedoch aus folgender Gruppe ausgewählt:
a) die momentane Temperatur eines Bremsbelages,
b) der Verlauf der Temperatur eines Bremsbelages in einer vorbestimmten Zeitspanne,
c) die momentane Temperatur einer Bremsscheibe,
d) der Verlauf der Temperatur einer Bremsscheibe in einer vorbestimmten Zeitspanne,
e) die Bremsbelagstärke,
f) der Verlauf des Betriebszustands einer die Bremse beim Parken feststellenden Betätigungseinrichtung der Bremse,
g) der Bremsdruck in einer pneumatischen oder hydraulischen Betätigungseinrichtung der Bremse,
h) die Bremskraft der Bremse,
i) der Hub der Bremse.

Da die Temperaturen des Bremsbelages und der Bremsscheibe Einfluß auf das Lüftspiel haben und das Lüftspiel mit zunehmender Temperatur abnimmt, ist es erfindungsgemäß bevorzugt vorgesehen, dass der untere Grenzwert bei einer höheren Temperatur des Bremsbelages und/oder der Bremsscheibe niedriger ist als bei einer niedrigeren Temperatur.

Eine höhere Temperatur des Bremsbelages und der Bremsscheibe kann beispielsweise daraus resultieren, dass die Bremse betätigt worden ist, weil beim Betätigen der Bremse Reibungshitze entsteht. Die Temperatur hängt dabei ab von der Dauer des Bremsvorgangs und von der Bremskraft. Nach einer längeren und stärkeren Bremsung kann die Temperatur der Bremsscheibe und/oder des Bremsbelages bei 500°C liegen.

Doch nicht nur die momentane Temperatur kann das Lüftspiel beeinflussen und zu ungerechtfertigten Fehlermeldungen führen. Vielmehr kann auch die Historie eine Rolle spielen. Daher ist es erfindungsgemäß besonders bevorzugt, dass der obere Grenzwert höher ist, wenn in einem vorbestimmten Zeitintervall die Temperatur des Bremsbelages und/oder der Bremsscheibe stärker gesunken ist, als wenn sie weniger oder nicht gesunken ist. So kann beispielsweise ein zeitlicher Temperaturgradient berücksichtigt werden. Ein stärkeres Absinken der Temperatur bzw. ein höherer zeitlicher Temperaturgradient lassen nämlich auf eine starke Erhitzung schließen, die bereits abklingt bzw. die bereits abgeklungen ist, weshalb der obere Grenzwert hoch gesetzt wird, um ungerechtfertigte Fehlermeldungen zu vermeiden.

Wegen der bereits oben erwähnten Reibung beim Bremsen nützt sich der Bremsbelag im Laufe des Betriebs der Bremse ab. Die Belagstärke verringert sich also im Laufe des Betriebs. Mit der Verringerung der Belagstärke geht aber eine Verringerung des Hubbedarfs einher. Es ist daher erfindungsgemäß weiter bevorzugt, dass der obere Grenzwert bei geringerer Belagstärke höher ist als bei größerer Belagstärke. Dies dient wiederum der Vermeidung von ungerechtfertigten Fehlermeldungen.

Wie bereits oben erwähnt führen Kompression und Relaxation der Bremsbeläge nach längerer Beaufschlagung der Feststellbremse, beispielsweise zum Parken, zu einer kurzfristigen Vergrößerung des Lüftspiels. Dies sollte nicht zu einer Fehlermeldung führen. Es ist daher nach einer weiter bevorzugten Ausführungsform der Erfindung vorgesehen, dass der obere Grenzwert höher ist, wenn in einem vorbestimmten Zeitintervall der Brems-Druck in einer pneumatischen oder hydraulischen Betätigungseinrichtung der Bremse oberhalb eines vorbestimmten Schwellenwerts liegt, als wenn er darunter liegt. So kann beispielsweise ein zeitlicher Druckgradient berücksichtigt werden. Der genannte Brems-Druck hängt nämlich mit der Kompression bzw. Relaxation des Bremsbelags zusammen. Durch diese Ausgestaltung toleriert das erfindungsgemäße Überwachungsverfahren die aus der Kompression und der Relaxation resultierenden Veränderungen des Lüftspiels, wodurch ungerechtfertigte Fehlermeldungen vermieden sind.

Dadurch, dass erfindungsgemäß der untere und/oder der obere Grenzwert variabel ist/sind, wird der Sollwert-Korridor für das Lüftspiel zur Meidung von Fehlwarnungen verbreitert. Es ist aber nicht auszuschließen, dass es zu einer übermäßigen und nicht gerechtfertigten Verbreiterung kommt und tatsächlich auftretende Fehler in der Bremse nicht zu einer Warnung führen. Daher ist, insbesondere aus Sicherheitsgründen, erfindungsgemäß bevorzugt vorgesehen, dass das Lüftspiel mindestens einer weiteren Bremse gemessen wird und auf einen Fehler geschlossen wird, wenn das Lüftspiel der überwachten Bremse zwischen dem unteren Grenzwert und einem unteren Sollwert und zwischen dem oberen Grenzwert und einem oberen Sollwert liegt, wobei der obere und der untere Sollwert zwischen dem unteren und dem oberen Grenzwert liegen und das Lüftspiel der weiteren Bremse zwischen dem unteren und dem oberen Sollwert liegt.

Mit anderen Worten wird die erfindungsgemäß überwachte Bremse hinsichtlich ihres Lüftspiels mit mindestens einer weiteren Bremse verglichen, die im übrigen ebenfalls überwacht werden kann, aber nicht muß. Liegt nun die (primär) überwachte Bremse hinsichtlich ihres Lüftspiels in einem kritischen Bereich, nämlich zwischen dem unteren Grenzwert und dem unteren Sollwert oder zwischen dem oberen Grenzwert und dem oberen Sollwert, also mit anderen Worten am Rande des zulässigen Korridors, die mindestens eine weitere Bremse aber nicht, so wird auf einen Fehler geschlossen, weil die Abweichung nur durch einen Fehler erklärbar ist, so dass beispielsweise das Ausgeben eines Warnsignals angezeigt ist.

Ebenfalls auf einem Vergleich beruht das erfindungsgemäß bevorzugte Verfahren zum Überwachen einer Bremse, wonach das Lüftspiel mindestens einer weiteren Bremse gemessen wird und auf einen Fehler geschlossen wird, wenn das Lüftspiel der überwachten Bremse in einem vorbestimmten Zeitintervall kontinuierlich steigt oder fällt, wohingegen das Lüftspiel der weiteren Bremse nicht kontinuierlich steigt oder fällt. Dieses Verfahren ist erfindungsgemäß unabhängig davon, ob der untere und/oder der obere Grenzwert variabel ist/sind oder unabhängig von das Lüftspiel beeinflussenden Betriebszustandsgrößen festgelegt. Denn wenn sich bei der überwachten Bremse das Lüftspiel kontinuierlich ändert, wohingegen die mindestens eine weitere Bremse eine solche Änderung nicht erfährt, muß es einen Grund für die Änderung geben, weshalb auf einen Fehler bei der überwachten Bremse geschlossen wird.

Wie bereits oben mehrfach angedeutet, ist es erfindungsgemäß bevorzugt vorgesehen, dass ein optisches und/oder ein akustisches Warnsignal abgegeben werden/wird, wenn auf einen Fehler geschlossen wird.

Erfindungsgemäß bevorzugt ist die überwachte Bremse Bestandteil eines Fahrzeuges, insbesondere eines Nutzfahrzeuges.

Schließlich schafft die Erfindung auch eine Bremse, insbesondere für Nutzfahrzeuge, die mit dem oben im einzelnen beschriebenen Verfahren überwacht wird, sowie ein einschlägiges Fahrzeug.

Im folgenden ist die Erfindung anhand eines bevorzugten Ausführungsbeispiels unter Bezugnahme auf die beiliegende Zeichnung mit weiteren Einzelheiten näher erläutert. Dabei zeigen
- die Figuren 1 und 2: Diagramme von Betriebszustandsgrößen einer Bremse unter verschiedenen Bedingungen,
- Figur 3: schematisch ein Fahrzeug mit zwei Scheibenbremsen,
- Figur 4: eine Überwachungseinrichtung für die beiden Scheibenbremsen nach Figur 3,
- die Figuren 5 bis 8: Lüftspieldiagramme,
- Figur 8a: ein weiteres Lüftspieldiagramm,
- Figur 9: ein Flußdiagramm eines bevorzugten Ausführungsbeispiels des erfindungsgemäßen Überwachungsverfahrens,
- Figur 10: die gleiche Ansicht wie Figur 4, jedoch von einem anderen Ausführungsbeispiel der erfindungsgemäßen Überwachungseinrichtung, und
- Figur 11: die gleiche Ansicht wie Figur 3, jedoch mit weiteren Einzelheiten.

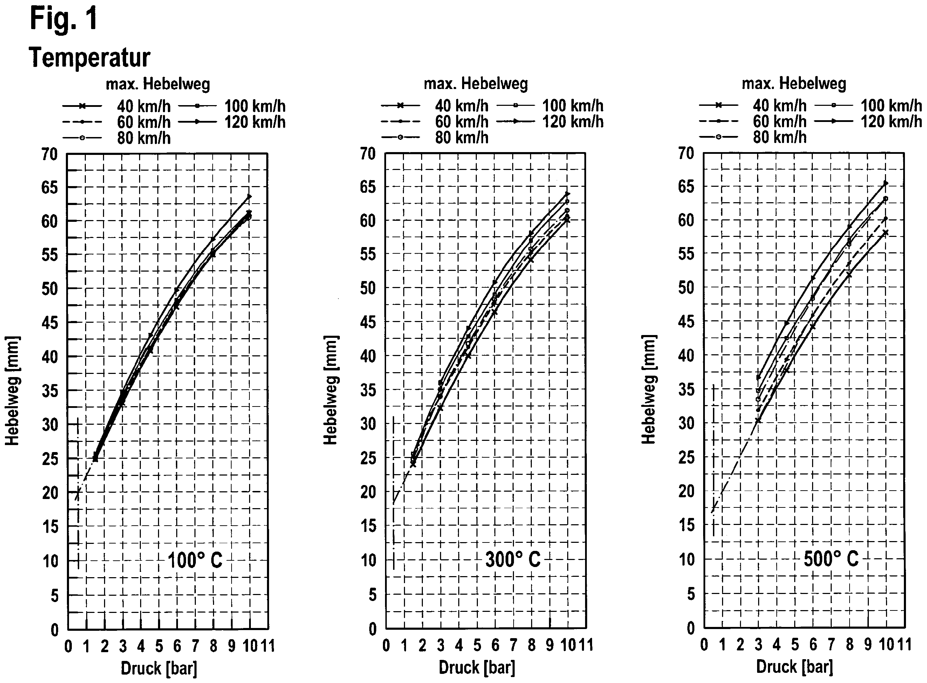

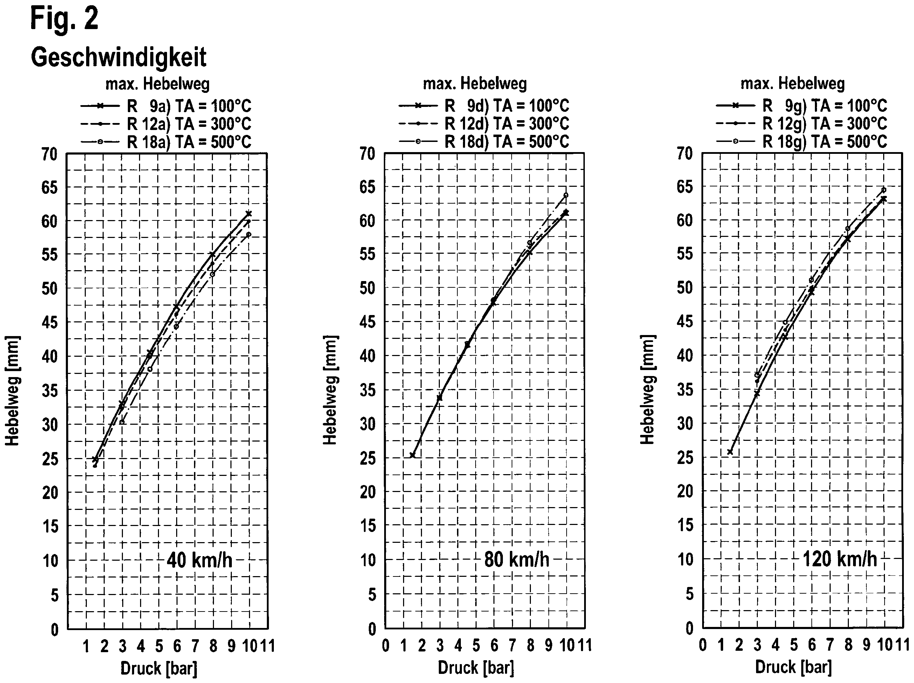

Die Diagramme nach den Figuren 1 und 2 zeigen jeweils den maximalen Hebelweg einer Scheibenbremse in Abhängigkeit vom Brems-Druck bei unterschiedlichen Temperaturen bzw. bei unterschiedlichen Geschwindigkeiten. Es zeigt sich, dass der jeweilige maximale Hebelweg, der Brems-Druck, die Temperatur und die Geschwindigkeit miteinander zusammenhängen bzw. voneinander abhängen. Der Hebelweg ist ein Maß für das Lüftspiel.

Wie insbesondere Figur 1 zu entnehmen ist, beträgt der maximale Hebelweg bei einem Brems-Druck von 10 bar und einer Geschwindigkeit von 40 km/h
61 mm bei einer Temperatur von 100°C,
60 mm bei einer Temperatur von 300°C und
57,5 mm bei einer Temperatur von 500°C.

Gemäß Figur 2 beträgt der maximale Hebelweg bei einem Brems-Druck von 10 bar und einer Temperatur von 500°C
58 mm bei einer Geschwindigkeit von 40 km/h,
64 mm bei einer Geschwindigkeit von 80 km/h und
64,5 mm bei einer Geschwindigkeit von 120 km/h.

Bei der Temperatur handelt es sich jeweils um die Temperatur eines der beteiligten Bremsbeläge. Da der Bremsbelag sich mit zunehmender Temperatur ausdehnt, wird der Hebelweg geringer, in dem genannten Beispiel um insgesamt 3,5 mm. In gleicher Weise nimmt auch das Lüftspiel ab.

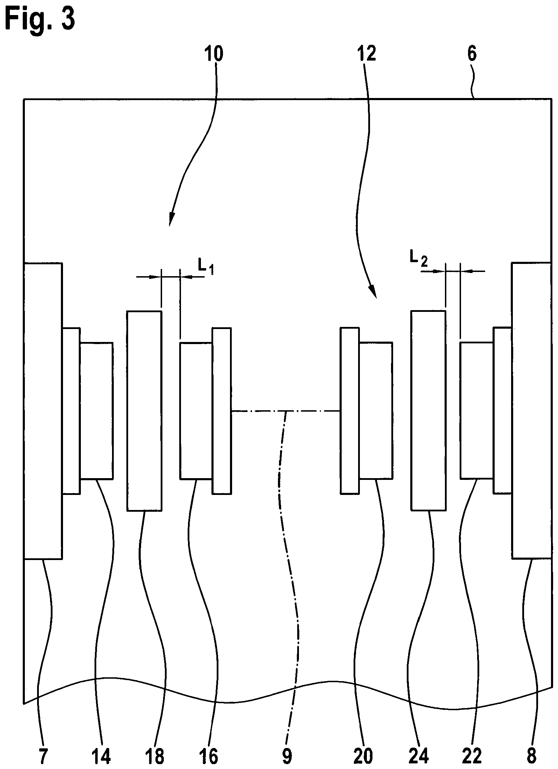

Figur 3 zeigt schematisch den vorderen Teil eines Nutzfahrzeuges 6 mit zwei Scheibenbremsen 10 und 12. Die linke Scheibenbremse 10 ist an dem linken vorderen Rad 7 des Nutzfahrzeugs 6 angebracht, die rechte Scheibenbremse 12 an dem rechten vorderen Rad 8 derselben Achse 9 des Nutzfahrzeugs 6. Die linke Scheibenbremse 10 weist zwei Bremsbeläge 14, 16 und eine Bremsscheibe 18 auf. Die rechte Scheibenbremse 12 weist zwei Bremsbeläge 20, 22 und eine Bremsscheibe 24 auf. Bei dem linken Lüftspiel L₁ der linken und insbesondere überwachten Scheibenbremse 10 handelt es sich um den Abstand zwischen dem Bremsbelag 16 und der Bremsscheibe 18. Bei dem rechten Lüftspiel L₂ der rechten und insbesondere weiteren Scheibenbremse 12 handelt es sich um den Abstand zwischen dem Bremsbelag 22 und der Bremsscheibe 24.

Das linke Lüftspiel L₁ wird wie folgt gemessen. Bei unbetätigter Bremse wird die von einem mechanisch mit dem Bremsbelag 16 gekoppelten linken Potentiometer (Wegsignalgeber) 26 abgegebene Spannung U gemessen. Ferner wird in unbetätigtem Zustand der Brems-Druck in einem pneumatischen Betätigungssystem der beiden Scheibenbremsen 10 und 12 gemessen. Dazu dient ein Drucksensor 28. Wird nun die linke Scheibenbremse 10 durch Erhöhung des Brems-Drucks zugespannt, bewegt sich der Bremsbelag 16 auf die Bremsscheibe 18 zu. Daher steigt die von dem linken Potentiometer 26 abgegebene Spannung. Erhöht sich diese Spannung nicht mehr, liegt der Bremsbelag 16 an der Bremsscheibe 18 an. Das linke Lüftspiel L₁ ist überwunden. Der Wert des linken Lüftspiels L₁ ergibt sich aus der Spannungserhöhung Δ U seit Beginn der Betätigung der Bremse unter Berücksichtigung der Kennlinie des als Wegsensor verwendeten linken Potentiometers 26. Beispielsweise kann die Kennlinie 0,06 V/mm entsprechen. Damit liegt das Ergebnis der Messung des linken Lüftspiels L₁ der linken Scheibenbremse 10 fest. Das rechte Lüftspiel L₂ der rechten Scheibenbremse 12 wird auf die gleiche Weise ermittelt, nur unter Verwendung eines zweiten als Wegsensor dienenden rechten Potentiometers 30.

Die Umrechnung der beiden Spannungssignale von den Potentiometern 26 und 30 in das aktuelle linke bzw. rechte Lüftspiel L₁ bzw. L₂ erfolgt in einer Auswerteeinrichtung 32.

Der Auswerteeinrichtung 32 wird auch die Temperatur T des Bremsbelags 16 der linken Scheibenbremse 10 zugeführt. Dazu dient ein Temperatursensor 34.

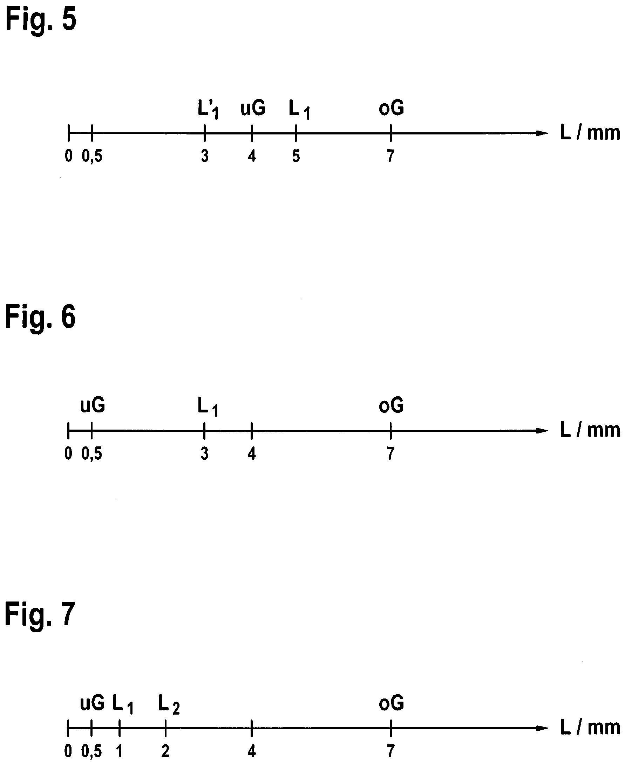

Die Auswerteeinrichtung 32 wertet das linke Lüftspiel L₁ der linken Scheibenbremse 10 unter Berücksichtigung der Temperatur des Bremsbelags 16 aus. Liegt beispielsweise die Temperatur des Bremsbelags 16 bei 100°C, legt sie den unteren Grenzwert uG für das linke Lüftspiel L₁ auf 4,0 mm fest, vgl. Figur 5. Beträgt die genannte Temperatur demgegenüber allerdings 500°C, legt sie den unteren Grenzwert uG auf beispielsweise 0,5 mm fest, vgl. die Figuren 6 bis 8. Der obere Grenzwert oG liegt beispielsweise jeweils bei 7 mm.

Wird nun das linke Lüftspiel L₁ bei einer Temperatur des Bremsbelags 16 von 100°C mit 5,0 mm gemessen, schließt die Auswerteeinrichtung 32 nicht auf einen Fehler und gibt auch kein Warnsignal aus. Wird das linke Lüftspiel L'₁ jedoch bei einer Temperatur des Bremsbelags 16 von 100°C mit 3,0 mm gemessen, so schließt die Auswerteeinrichtung 32 auf einen Fehler und steuert eine Warnlampe 36 an. Diese beiden Fälle sind in Fig. 5 gezeigt.

Liegt die Temperatur des Bremsbelags 16 allerdings bei 500°C, so schließt die Auswerteeinrichtung 32 nicht auf einen Fehler und gibt auch kein Signal an die Warnlampe 36, solange das linke Lüftspiel L₁ nicht mit weniger als 0,5 mm gemessen wird, vgl. Figur 6, wo das linke Lüftspiel L₁ 3 mm beträgt.

Damit ist ausgeschlossen, dass temperaturbedingte Lüftspielverringerungen zu falschem Alarm führen.

Die obigen Ausführungen beziehen sich auf eine Überwachung der linken Scheibenbremse 10 ohne Einbeziehung der rechten Scheibenbremse 12. Nach einer besonders bevorzugten Ausgestaltung der Erfindung kann aber zusätzlich zu dem oben beschriebenen Überwachungsverfahren noch die rechte Scheibenbremse 12 bzw. deren rechtes Lüftspiel L₂ in die Überwachung der linken Scheibenbremse 10 einbezogen werden.

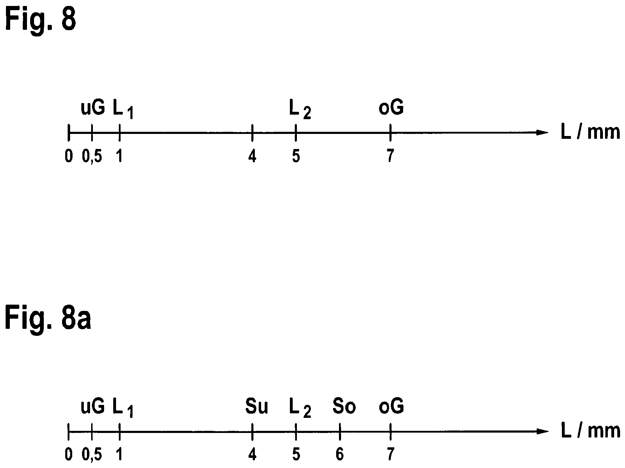

Oben ist ausgeführt worden, dass beispielsweise bei einer Temperatur des Bremsbelags 16 von 500°C eine Fehlermeldung erst dann ausgegeben wird, wenn das linke Lüftspiel L₁ den Wert von 0,5 mm unterschreitet. Es wird also beispielsweise bei einem linken Lüftspiel L₁ von 1,0 mm kein Warnsignal ausgegeben, sofern wie gemäß Figur 7 das rechte Lüftspiel L₂ auch vergleichsweise niedrig ist, beispielsweise 2 mm. Sollte aber gleichzeitig das rechte Lüftspiel L₂ wesentlich höher liegen, also beispielsweise gemäß Figur 8 bei 5,0 mm, kann das nur darauf zurückzuführen sein, dass bei einer der beiden linken oder rechten Scheibenbremsen 10, 12 ein Fehler aufgetreten ist. In diesem Falle wird also die Auswerteeinrichtung 32 die Warnlampe 36 ansteuern, obwohl der wegen der Temperatur des Bremsbelags 16 von 500°C abgesenkte untere Grenzwert uG für das linke Lüftspiel L₁ von 0,5 mm nicht unterschritten ist.

Es wird ausdrücklich darauf hingewiesen, dass der erfindungsgemäße Vergleich der beiden linken und rechten Lüftspiele L₁ und L₂ miteinander zur Prüfung auf Fehlfunktionen unabhängig davon ist, ob der untere und/oder der obere Grenzwert uG, oG für das jeweilige linke oder rechte Lüftspiel L₁ oder L₂ fest vorgegeben oder abhängig von Betriebszustandsgrößen variierbar ist/sind.

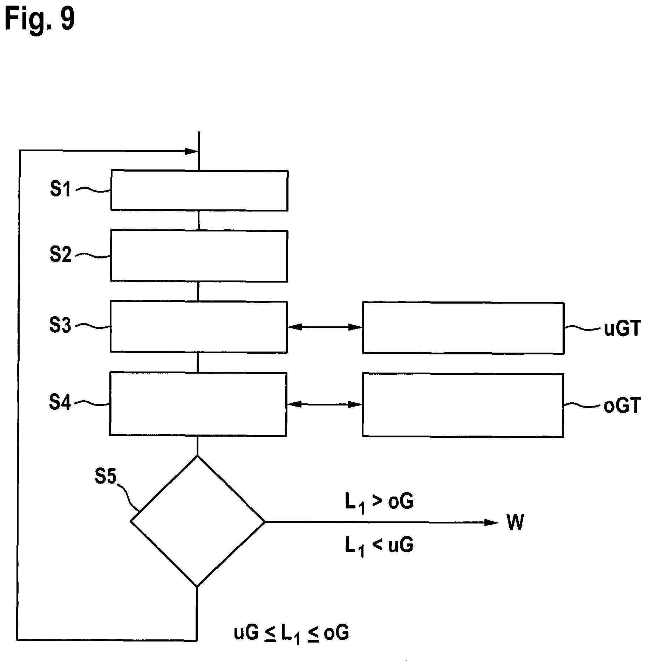

Im folgenden ist unter Bezugnahme auf das Flußdiagramm nach Figur 9 ein weiteres Ausführungsbeispiel der Erfindung erläutert.

In einem ersten Schritt S1 wird das linke Ist-Lüftspiel L₁ ermittelt. Danach wird in Schritt S2 die Temperatur T des zugehörigen zuspannseitigen Bremsbelages 16 ermittelt.

In dem darauffolgenden Schritt S3 wird der untere Grenzwert uG für das linke Lüftspiel L₁ ermittelt, und zwar aus einer Tabelle uGT, die die unteren Grenzwerte in Abhängigkeit von Belagtemperaturen T aufführt. In gleicher Weise wird der obere Grenzwert oG für das linke Luftspiel L₁ unter Anwendung einer entsprechenden Tabelle oGT in Schritt S4 ermittelt.

In Schritt S5 wird das linke Lüftspiel L₁ mit den beiden Grenzwerten uG, oG verglichen. Liegt es zwischen dem unteren Grenzwert uG und dem oberen Grenzwert oG, wird auf keinen Fehler geschlossen. Liegt es aber oberhalb des oberen Grenzwerts oG oder unterhalb des unteren Grenzwerts uG, wird ein Warnsignal W ausgegeben. Bei Unterschreiten des unteren Grenzwerts uG droht die Bremse nämlich heißzulaufen. Ist der obere Grenzwert oG überschritten, ist die Hebelwegreserve zu gering. In beiden Fällen müssen entsprechende Maßnahmen ergriffen werden.

In den Figuren 5 bis 8a sind Zahlenwerte für Lüftspiele, Grenzwerte und dergleichen angegeben. Diese Zahlenwerte sind selbstverständlich jeweils abhängig von den jeweiligen Gegebenheiten in den betreffenden Bremsen. So sind im Rahmen der Erfindung auch folgende Werte möglich:
Figur 5
   L₁' = 0,8 mm, uG = 1 mm, L₁ = 1,2 mm, oG = 2 mm.
Figur 6
   uG = 0,5 mm, L₁ = 0,8 mm, oG = 2 mm
Figur 7
   uG = 0,5 mm, L₁ = 0,6 mm, L₂ = 0,7 mm, oG = 2 mm
Figur 8
   uG = 0,5 mm, L₁ = 0,6 mm, L₂ = 1,2 mm, oG = 2 mm
Figur 8a
   uG = 0,5 mm, L₁ = 0,6 mm, Su = 1 mm, L₂ = 1,2 mm, So = 1,6 mm.

Oben ist unter Bezugnahme auf Figur 8 die Überwachung der linken Scheibenbremse 10 unter Einbeziehung der rechten Scheibenbremse 12 erläutert worden. Danach wird die Warnlampe 36 angesteuert, wenn sich das rechte Lüftspiel L₂ wesentlich von dem linken Lüftspiel L₁ unterscheidet.

Es kann aber auch die Ansteuerung der Warnlampe 36 davon abhängig gemacht werden, ob das rechte Lüftspiel L₂ unterhalb eines unteren Sollwerts Su oder oberhalb eines oberen Sollwerts So liegt. Bei einer besonders bevorzugten Ausführungsform der Erfindung liegen gemäß Figur 8a der untere Sollwert Su bei 4 mm und der obere Sollwert So bei 6 mm.

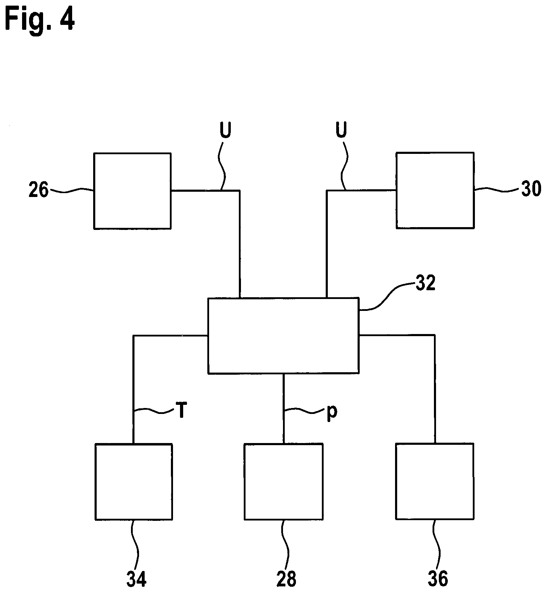

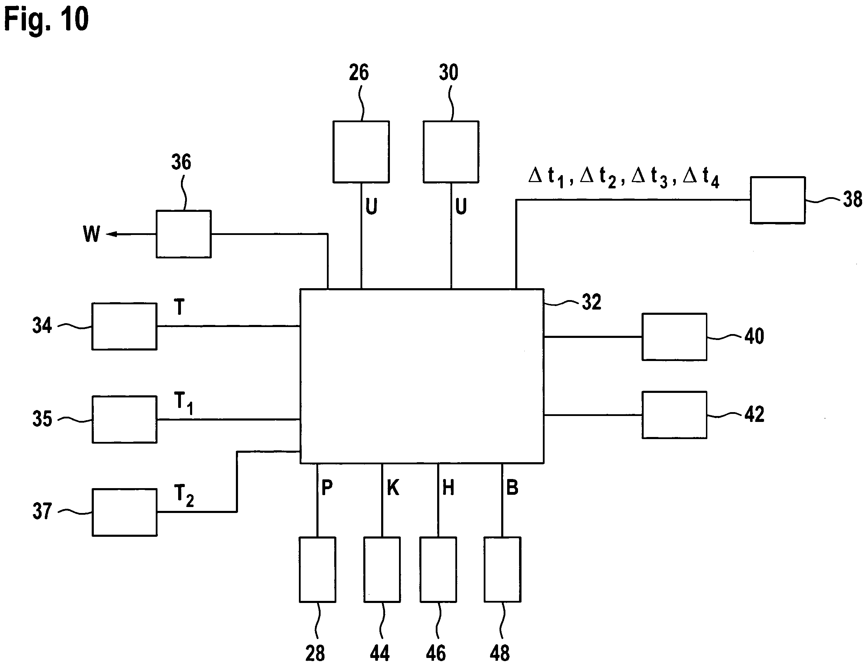

Figur 4 zeigt ein erstes Ausführungsbeispiel der erfindungsgemäßen Überwachungseinrichtung für die beiden Scheibenbremsen nach Figur 3. Figur 10 zeigt ein weiteres Ausführungsbeispiel. Dieses weitere Ausführungsbeispiel stimmt insofern mit dem Ausführungsbeispiel nach Figur 4 überein, als es ebenfalls das linke Potentiometer 26, den Drucksensor 28, das rechte Potentiometer 30, die Auswerteeinrichtung 32, den Temperatursensor 34 und die Warnlampe 36 aufweist. Während der Temperatursensor 34 die Temperatur T des zuspannseitigen Bremsbelags 16 der linken Scheibenbremse 10 mißt, ist ein weiterer Temperatursensor 35 vorgesehen, der die Temperatur T₁ des felgenseitigen Bremsbelags 22 der rechten Scheibenbremse 12 mißt. Ein dritter Temperatursensor 37 mißt die Temperatur T₂ der linken Bremsscheibe 18.

Das von der Warnlampe 36 ggf. abzugebende Warnsignal ist mit dem Buchstaben W bezeichnet.

An die Auswerteeinrichtung 32 ist darüber hinaus ein Zeitgeber 38 angeschlossen. Er dient zum Ermitteln einer ersten vorbestimmten Zeitspanne Δt₁ für die Auswertung des Verlaufs der Temperatur T des linken zuspannseitigen Bremsbelages 16, zum Ermitteln einer zweiten vorbestimmten Zeitspanne Δt₂ für die Auswertung des Verlaufs der Temperatur T₂ der linken Bremsscheibe 18, zum Ermitteln des ersten vorbestimmten Zeitintervalls Δt₃ für die Auswertung der Temperatur T des linken zuspannseitigen Bremsbelages 16 oder der linken Bremsscheibe 18 hinsichtlich der Frage, ob sie innerhalb des ersten vorbestimmten Zeitintervalls Δt₃ stärker oder weniger stark gesunken ist, und zum Ermitteln des zweiten vorbestimmten Zeitintervalls Δt₄, innerhalb dessen der durch das Bremsdrucksignal P repräsentierte Druck in einer hydraulisch oder pneumatisch ausgestalteten Betriebs-Betätigungseinrichtung 42 der Bremse oberhalb eines vorbestimmten Schwellenwertes liegt.

Eine Betätigungseinrichtung zum Feststellen der linken und der rechten Bremse 10, 12 (Parkbremse) ist mit der Bezugszahl 40 bezeichnet.

Eine Einrichtung 44 zum Erfassen der Bremskraft und zum Abgeben eines Bremskraftsignals K, eine Einrichtung 46 zum Erfassen des Bremshubes und zum Abgeben eines Bremshubsignals H und eine Einrichtung 48 zum Erfassen der Belagstärke B₁₋₂ des linken Bremsbelages 16 und zum Abgeben eines entsprechenden Belagstärkesignals B sind an die Auswerteeinrichtung 32 angeschlossen.

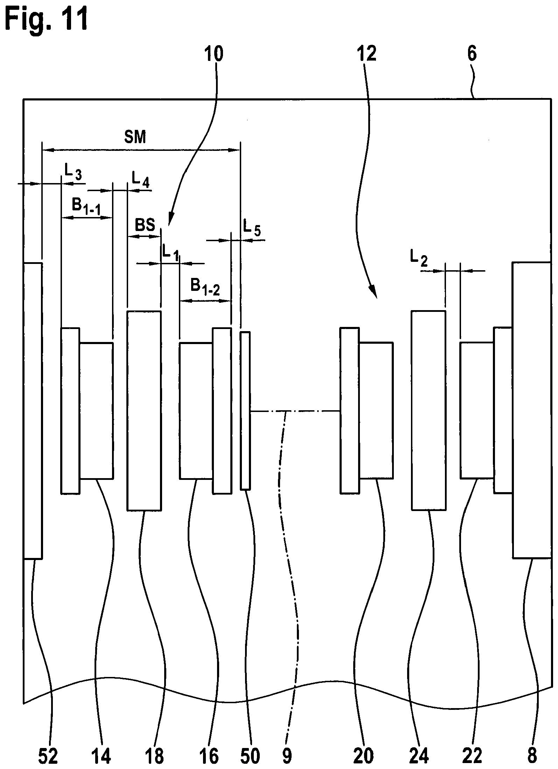

Über das der Figur 3 Entnehmbare hinaus zeigt die Figur 11 schematisch einen linken Bremskolben 50 und einen linken Bremssattel 52. Zur Verbesserung der Übersichtlichkeit ist dabei das linke Rad 7 nicht gezeigt. Neben dem Lüftspiel L₁ zwischen der linken Bremsscheibe 18 und dem linken zuspannseitigen Bremsbelag 16 sind weitere Lüftspiele eingezeichnet: Das Lüftspiel L₃ zwischen dem linken Bremssattel 52 und dem linken felgenseitigen Bremsbelag 14, das Lüftspiel L₄ zwischen dem linken felgenseitigen Bremsbelag 14 und der linken Bremsscheibe 18 und das Lüftspiel L₅ zwischen dem linken zuspannseitigen Bremsbelag 16 und dem linken Bremskolben 50.

Die Belagstärken des linken felgenseitigen Bremsbelags 14 und des linken zuspannseitigen Bremsbelags 16 sind mit den Bezugszeichen B₁₋₁ bzw. B₁₋₂ bezeichnet. Die Stärke der linken Bremsscheibe 18 ist mit dem Bezugszeichen BS bezeichnet. Das Bezugszeichen SM bezeichnet das linke Schachtmaß, also den Abstand zwischen den linken Bremsen-Anlageteilen, d.h. dem linken Bremssattel 52 und dem linken Bremskolben 50.

Die Erfindung ist oben anhand von Figur 3 unter Bezugnahme auf das linke Lüftspiel L₁, d.h. den Abstand zwischen der linken Bremsscheibe 18 und dem linken zuspannseitigen Bremsbelag 16 erläutert worden. Sie ist aber auch auf andere Lüftspiele anwendbar, beispielsweise auf das Lüftspiel, das der Summe der Lüftspiele L₁ zwischen der linken Bremsscheibe 18 und dem linken zuspannseitigen Bremsbelag 16 und L₅ zwischen dem linken zuspannseitigen Bremsbelag 16 und dem linken Bremskolben 50 entspricht. Diese Anwendung ist erfindungsgemäß besonders bevorzugt. Dabei stellen dann das Lüftspiel L₁ zwischen der linken Bremsscheibe 18 und dem linken zuspannseitigen Bremsbelag 16 sowie das Lüftspiel L₅ zwischen dem linken zuspannseitigen Bremsbelag 16 und dem linken Bremskolben 50 jeweils ein Teillüftspiel dar, und die beiden Teillüftspiele werden erfindungsgemäß in ihrer Summe überwacht. Insbesondere ist auch eine Anwendung auf die Summe der Lüftspiele L₁ zwischen der linken Bremsscheibe 18 und dem linken zuspannseitigen Bremsbelag 16, L₃ zwischen dem linken zuspannseitigen Bremsbelag 16 und dem linken Bremskolben 50, L₄ zwischen dem linken Bremssattel 52 und dem linken felgenseitigen Bremsbelag 14 und L₅ zwischen dem linken zuspannseitigen Bremsbelag 16 und dem linken Bremskolben 50 von Bedeutung, die dann wiederum als Teillüftspiele angesehen werden.

### Bezugszeichenliste

- 6: Fahrzeug
- 7: Rad
- 8: Rad
- 9: Achse
- 10: linke Scheibenbremse
- 12: rechte Scheibenbremse
- 14: linker felgenseitiger Bremsbelag
- 16: linker zuspannseitiger Bremsbelag
- 18: linke Bremsscheibe
- 20: rechter zuspannseitiger Bremsbelag
- 22: rechter felgenseitiger Bremsbelag
- 24: rechte Bremsscheibe
- 26: linkes Potentiometer
- 28: Drucksensor
- 30: rechtes Potentiometer
- 32: Auswerteeinrichtung
- 34: Temperatursensor für linken zuspannseitigen Bremsbelag 16
- 35: Temperatursensor für rechten felgenseitigen Bremsbelag 22
- 36: Warnlampe
- 38: Zeitgeber
- 40: Betätigungseinrichtung für Parkbremse
- 42: Betriebsbremsen-Betätigungseinrichtung
- 44: Einrichtung zum Erfassen der Bremskraft
- 46: Einrichtung zum Erfassen des Bremshubes
- 48: Einrichtung zum Erfassen der Belagstärke
- 50: linker Bremskolben
- 52: linker Bremssattel
- B: Belagstärkesignal
- B₁₋₁: Stärke des linken felgenseitigen Bremsbelages 14
- B₁₋₂: Stärke des linken zuspannseitigen Bremsbelages 16
- BS: Stärke der linken Bremsscheibe 18
- H: Bremshubsignal
- K: Bremskraftsignal
- L₁: (linkes) Lüftspiel zwischen linkem zuspannseitigem Bremsbelag 16 und linker Bremsscheibe 18
- L₂: (rechtes) Lüftspiel zwischen rechtem felgenseitigem Bremsbelag 22 und rechter Bremsscheibe 24
- L₃: Lüftspiel zwischen linkem Bremskolben50 und linkem felgenseitigem Bremsbelag 14
- L₄: Lüftspiel zwischen linkem zuspannseitigem Bremsbelag 14 und linker Bremsscheibe 18
- L₅: Lüftspiel zwischen linkem Bremssattel 52 und linkem zuspannseitigem Bremsbelag 16
- oG: oberer Grenzwert
- oGT: Tabelle mit oberen Grenzwerten oG
- P: Bremsdrucksignal
- So: oberer Sollwert
- Su: unterer Sollwert
- SM: linkes Schachtmaß
- T: Temperatur(signal) des linken zuspannseitigen Bremsbelages 16
- T₁: Temperatur(signal) des rechten felgenseitigen Bremsbelages 22
- T₂: Temperatur(signal) der linken Bremsscheibe 18
- Δt₁: Zeitspannensignal für Auswertung der Temperatur T des linken zuspannseitigen Bremsbelages 16
- Δt₂: Zeitspannensignal für Auswertung der Temperatur T₁ des rechtenfelgenseitigen Bremsbelages 22
- Δt₃: Zeitintervallsignal für Auswertung des Absenkungsgrades der Temperatur T₁ des linken zuspannseitigen Bremsbelages 16 oder der Temperatur der linken Bremsscheibe 18
- Δt₄: Zeitintervallsignal für Vergleich des Bremdruck(signals)P mit Schwellenwert
- U: Spannungssignal
- uG: unterer Grenzwert
- uGT: Tabelle mit unteren Grenzwerten
- W: Warnsignal

## Patentansprüche

1. Verfahren zum Überwachen einer Bremse (10), bei dem das Lüftspiel (L₁) der Bremse (10) gemessen wird und auf einen Fehler geschlossen wird; wenn das Lüftspiel (L₁) der Bremse (10) einen unteren Grenzwert (uG) unterschreitet oder einen oberen Grenzwert (oG) überschreitet,
**dadurch gekennzeichnet, dass**
der untere und/oder der obere Grenzwert (uG, oG) variabel ist/sind, und zwar abhängig von mindestens einer momentanen oder vergangenen das Lüftspiel (L₁) beeinflussenden Betriebszustandsgröße.

2. Verfahren nach Anspruch 1, **dadurch gekennzeichnet, dass** die das Lüftspiel beeinflussende mindestens eine Betriebszustandsgröße aus folgender Gruppe ausgewählt ist:
a) die momentane Temperatur (T) eines Bremsbelages (14, 16),
b) der Verlauf der Temperatur (T) eines Bremsbelages (14, 16) in einer vorbestimmten Zeitspanne,
c) die momentane Temperatur (T) einer Bremsscheibe (18),
d) der Verlauf der Temperatur (T) einer Bremsscheibe (18) in einer vorbestimmten Zeitspanne,
e) die Bremsbelagstärke,
f) der Verlauf des Betriebszustands einer die Bremse (10) beim Parken feststellenden Betätigungseinrichtung der Bremse (10),
g) der Bremsdruck (p) in einer pneumatischen oder hydraulischen Betätigungseinrichtung der Bremse (10),
h) der Bremskraft der Bremse (10),
i) der Hub der Bremse (10).

3. Verfahren nach Anspruch 1 oder 2, **dadurch gekennzeichnet, dass** der untere Grenzwert (uG) bei einer höheren Temperatur (T) des Bremsbelages (14, 16) und/oder der Bremsscheibe (18) niedriger ist als bei einer niedrigeren Temperatur (T).

4. Verfahren nach einem der Ansprüche 1 bis 3, **dadurch gekennzeichnet, dass** der obere Grenzwert (oG) höher ist, wenn in einem vorbestimmten Zeitintervall die Temperatur (T) des Bremsbelages (14, 16) und/oder der Bremsscheibe (18) stärker gesunken ist, als wenn sie weniger oder nicht gesunken ist.

5. Verfahren nach einem der Ansprüche 1 bis 4, **dadurch gekennzeichnet, dass** der obere Grenzwert (oG) bei geringerer Belagstärke höher ist als bei größerer Belagstärke.

6. Verfahren nach einem der Ansprüche 1 bis 5, **dadurch gekennzeichnet, dass** der obere Grenzwert (oG) höher ist, wenn in einem vorbestimmten Zeitintervall der Druck (p) in einer pneumatischen oder hydraulischen Betätigungseinrichtung der Bremse (10) oberhalb eines vorbestimmten Schwellenwertes liegt, als wenn er darunter liegt.

7. Verfahren nach einem der Ansprüche 1 bis 6,
**dadurch gekennzeichnet, dass**
das Lüftspiel (L₂) mindestens einer weiteren Bremse (12) gemessen wird und auf einen Fehler geschlossen wird, wenn
das Lüftspiel (L₁) der überwachten Bremse (10) zwischen dem unteren Grenzwert (uG) und einem unteren Sollwert oder zwischen dem oberen Grenzwert (oG) und einem oberen Sollwert liegt,
wobei der obere und der untere Sollwert zwischen dem unteren und dem oberen Grenzwert (uG; oG)liegen, und
das Lüftspiel (L₂) der weiteren Bremse (12) zwischen dem unteren und dem oberen Sollwert liegt.

8. Verfahren zum Überwachen einer Bremse (10), bei dem das Lüftspiel (L₁) gemessen wird, nach einem der Ansprüche 1 bis 6,
**dadurch gekennzeichnet, dass**
das Lüftspiel (L₂) mindestens einer weiteren Bremse (12) gemessen wird und auf einen Fehler geschlossen wird, wenn das Lüftspiel (L₁) der überwachten Bremse (10) in einem vorbestimmten Zeitintervall kontinuierlich steigt oder fällt, wohingegen das Lüftspiel (L₂) der weiteren Bremse (12) nicht kontinuierlich steigt oder fällt.

9. Verfahren nach einem der vorangehenden Ansprüche,
**dadurch gekennzeichnet, dass**
dann, wenn auf einen Fehler geschlossen wird, ein optisches und/oder ein akustisches Warnsignal abgegeben wird.

10. Verfahren nach einem der vorangehenden Ansprüche, **dadurch gekennzeichnet, daß** das Lüftspiel eine Summe aus Teillüftspielen ist.

11. Verfahren nach einem der Ansprüche 1 bis 10 , **dadurch gekennzeichnet, dass** die mindestens eine Bremse (10) Bestandteil eines Fahrzeugs (6) ist, insbesondere eines Nutzfahrzeugs.

12. Bremse, insbesondere für Nutzfahrzeuge, **dadurch gekennzeichnet, dass** sie mit einem Verfahren nach einem der Ansprüche 1 bis 11 überwacht wird.

13. Bremse nach Anspruch 12, **dadurch gekennzeichnet, dass** diese als Scheibenbremse (10) ausgebildet ist.

14. Fahrzeug (6), insbesondere Nutzfahrzeug, **dadurch gekennzeichnet, dass** es eine Bremse, insbesondere Scheibenbremse (10), aufweist, die mit einem Verfahren nach einem der Ansprüche 1 bis 11 überwacht wird.

## Claims

1. A method for monitoring a brake (10), in which the air gap (L₁) of the brake (10) is measured and an error is inferred when the air gap (L₁) of the brake (10) undershoots a lower limit value (uG) or exceeds an upper limit value (oG),
**characterized in that**
the lower and/or the upper limit value (uG, oG) is/are variable, and dependent on at least one current or past operating status variable influencing the air gap (L₁).

2. The method according to claim 1, **characterized in that** the at least one operating status variable influencing the air gap is selected from the following group:
a) the current temperature (T) of a brake lining (14, 16),
b) the profile of the temperature (T) of a brake lining (14, 16) in a predetermined period of time,
c) the current temperature (T) of a brake disk (18),
d) the profile of the temperature (T) of a brake disk (18) in a predetermined period of time,
e) the brake lining thickness,
f) the profile of the operating status of an actuating device of the brake (10) locking the brake (10) when parking,
g) the brake pressure (p) in a pneumatic or hydraulic actuation device of the brake (10),
h) the braking force of the brake (10),
i) the stroke of the brake (10).

3. The method according to claim 1 or 2, **characterized in that** the lower limit value (uG) is lower at a higher temperature (T) of the brake lining (14, 16) and/or of the brake disk (18) than at a lower temperature (T).

4. The method according to any of claims 1 to 3, **characterized in that** the upper limit value (oG) is higher when, in a predetermined time interval the temperature (T) of the brake lining (14, 16) and/or of the brake disk (18) has fallen more sharply than when it is less or has not fallen.

5. The method according to any of claims 1 to 4, **characterized in that** the upper limit value (oG) in the case of lower lining thickness is higher than in the case of greater lining thickness.

6. The method according to any of claims 1 to 5, **characterized in that** the upper limit value (oG) is higher when in a predetermined time interval, the pressure (p) in a pneumatic or hydraulic actuation device of the brake (10) lies above a predetermined threshold value, than when it is below said predetermined threshold value.

7. The method according to any of claims 1 to 6,
**characterized in that**
the air gap (L₂) of at least one further brake (12) is measured and an error is inferred when
the air gap (L₁) of the monitored brake (10) lies between the lower limit value (uG) and a lower set point value or lies between the upper limit value (oG) and an upper set point value,
wherein the upper and lower set point value lies between the lower and upper limit value (uG; oG), and
the air gap (L₂) of the further brake (12) lies between the lower and upper set point value.

8. A method for monitoring a brake (10), in which the air gap (L₁) is measured, according to any of claims 1 to 6,
**characterized in that**
the air gap (L₂) of at least one further brake (12) is measured and an error is inferred when the air gap (L₁) of the monitored brake (10) continuously rises or falls in a predetermined time interval, while the air gap (L₂) of the further brake (12) does not continuously rise or fall.

9. The method according to any of the preceding claims,
**characterized in that**
whenever an error is inferred, an optical and/or acoustic warning signal is emitted.

10. The method according to any of the preceding claims, **characterized in that** the air gap is a sum of partial air gaps.

11. The method according to any of claims 1 to 10, **characterized in that** the at least one brake (10) is a component of a vehicle (6), in particular of a utility vehicle.

12. A brake, in particular for utility vehicles, **characterized in that** it is monitored with a method according to any of claims 1 to 11.

13. The brake according to claim 12, **characterized in that** it is configured as a disk brake (10).

14. A vehicle (6), in particular a utility vehicle, **characterized in that** it comprises a brake, in particular a disk brake (10), which is monitored with a method according to any of claims 1 to 11.

## Revendications

1. Procédé de surveillance d'un frein (10), dans lequel le jeu (L₁) du frein (10) est mesuré et il est conclu à un défaut lorsque le jeu (L₁) du frein (10) est inférieur à une valeur limite inférieure (uG) ou supérieur à une valeur limite supérieure (oG),
**caractérisé en ce que**
la valeur limite inférieure et/ou supérieure (uG, oG) est/sont variable(s), et ce en fonction d'au moins une grandeur d'état de fonctionnement momentanée ou passée qui influe sur le jeu (L₁) .

2. Procédé selon la revendication 1, **caractérisé en ce que** la au moins une grandeur d'état de fonctionnement qui influe sur le jeu est sélectionnée dans le groupe suivant :
a) la température (T) momentanée d'une garniture de frein (14, 16),
b) l'évolution de la température (T) d'une garniture de frein (14, 16) dans une période prédéterminée,
c) la température (T) momentanée d'un disque de frein (18),
d) l'évolution de la température (T) d'un disque de frein (18) dans une période prédéterminée,
e) l'épaisseur de la garniture de frein,
f) l'évolution de l'état de fonctionnement d'un dispositif de commande du frein (10) qui bloque le frein (10) lors du stationnement,
g) la pression de freinage (p) dans un dispositif de commande pneumatique ou hydraulique du frein (10),
h) la force de freinage du frein (10),
i) la course du frein (10).

3. Procédé selon la revendication 1 ou 2, **caractérisé en ce que** la valeur limite inférieure (uG) lors d'une température (T) plus élevée de la garniture de frein (14, 16) et/ou du disque de frein (18) est plus basse que lors d'une température (T) plus basse.

4. Procédé selon l'une des revendications 1 à 3, **caractérisé en ce que** la valeur limite supérieure (oG) est plus élevée lorsque dans un intervalle de temps prédéterminé la température (T) de la garniture de frein (14, 16) et/ou du disque de frein (18) a davantage diminué que lorsqu'elle a moins ou pas diminué.

5. Procédé selon l'une des revendications 1 à 4, **caractérisé en ce que** la valeur limite supérieure (oG) lors d'une épaisseur de garniture plus petite est plus élevée que lors d'une épaisseur de garniture plus grande.

6. Procédé selon l'une des revendications 1 à 5, **caractérisé en ce que** la valeur limite supérieure (oG) est plus élevée lorsque dans un intervalle de temps prédéterminé la pression (p) dans un dispositif de commande pneumatique ou hydraulique du frein (10) se situe au-dessus d'une valeur seuil prédéterminée que lorsqu'elle se trouve au-dessous de celle-ci.

7. Procédé selon l'une des revendications 1 à 6,
**caractérisé en ce que**
le jeu (L₂) d'au moins un autre frein (12) est mesuré et il est conclu à un défaut lorsque
le jeu (L₁) du frein (10) surveillé se situe entre la valeur limite inférieure (uG) et une valeur de consigne inférieure ou entre la valeur limite supérieure (oG) et une valeur de consigne supérieure,
dans lequel la valeur de consigne supérieure et inférieure se situent entre la valeur limite inférieure et supérieure (uG ; oG), et
le jeu (L₂) de l'autre frein (12) se situe entre la valeur de consigne inférieure et supérieure.

8. Procédé de surveillance d'un frein (10), dans lequel le jeu (L₁) est mesuré, selon l'une des revendications 1 à 6,
**caractérisé en ce que**
le jeu (L₂) d'au moins un autre frein (12) est mesuré et il est conclu à un défaut lorsque le jeu (L₁) du frein (10) surveillé augmente ou tombe en continu dans un intervalle de temps prédéterminé, tandis que le jeu (L₂) de l'autre frein (12) n'augmente pas ou ne tombe pas en continu.

9. Procédé selon l'une des revendications précédentes,
**caractérisé en ce que**
un signal de détresse optique et/ou acoustique est émis dès lors qu'il est conclu à un défaut.

10. Procédé selon l'une des revendications précédentes, **caractérisé en ce que** le jeu est une somme de jeux partiels.

11. Procédé selon l'une des revendications 1 à 10, **caractérisé en ce que** le au moins un frein (10) fait partie d'un véhicule (6), en particulier d'un véhicule utilitaire.

12. Frein, en particulier pour des véhicules utilitaires, **caractérisé en ce qu'**il est surveillé avec un procédé selon l'une des revendications 1 à 11.

13. Frein selon la revendication 12, **caractérisé en ce que** celui-ci est conçu en tant que frein à disque (10).

14. Véhicule (6), en particulier véhicule utilitaire, **caractérisé en ce qu'**il présente un frein, en particulier un frein à disque (10), qui est surveillé avec un procédé selon l'une des revendications 1 à 11.
